Europäisches Patentamt

European Patent Office

Office européen des brevets

(19)

(11) Veröffentlichungsnummer: **0 011 655**
A1

(12) # EUROPÄISCHE PATENTANMELDUNG

(21) Anmeldenummer: 78101455.0

(22) Anmeldetag: 25.11.78

(51) Int. Cl.³: **B 65 G 15/56**
**A 01 K 31/04**

(43) Veröffentlichungstag der Anmeldung:
11.06.80 Patentblatt 80 12

(84) Benannte Vertragsstaaten:
BE CH DE FR NL

(71) Anmelder: Olschewski, Gerhard
Waldstrasse 50
D-4520 Melle 1(DE)

(72) Erfinder: Olschewski, Gerhard
Waldstrasse 50
D-4520 Melle 1(DE)

(54) **Förderlaschenband für den Kottransport.**

(57) Vorgenannter Gegenstand wird in den Geflügelbatterie-anlagen eingesetzt. Er besteht aus Kunstfasergewebe (Trevi-ra) mit beidseitiger Kunststoffbeschichtung. An den Randzo-nen in Laufrichtung ist eine Stahleinlage in Seilausführung. Das Seil wird eingewebt oder durch überlappte Streifen in Längsrichtung verschweißt.

Durch die Stahleinlage ergeben sich folgende Vorteile:
a) Ungeziefer, wie Ratten und Mäuse können die Bänder nicht mehr zernagen.
b) Ein Einreißen und damit Übereinanderlaufen des Trans-portbandes ist nicht mehr möglich.
c) Es ergibt sich zusätzlich eine Versteifung in Längsrichtung, die eine gute Seitenführung und gleichzeitig die Kaufrichtung garantiert.

Croydon Printing Company Ltd

Fa.
Gerhard Olschewski
Waldstraße 50

4520 Melle 1

Schutzansprüche
_____

"Förderlaschenband für den Kottransport"

1) Förderlaschenband für den Kottransport in Geflügelbatterieanlagen dadurch gekennzeichnet, daß an beiden Randzonen in
   Laufrichtung eine Stahleinlage in Seilausführung eingewebt
   oder durch überlappte Streifen in Längsrichtung verschweißt
   sind.

2) Förderlaschenband für den Kottransport nach Anspruch 1,
   dadurch gekennzeichnet, daß es aus Kunststoffgewebe mit
   beidseitiger Kunststoffbeschichtung besteht.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 631 600 (GUSTAV WOLF)  * Anspruch 1 * | 1 |
| | DE - U - 1 738 581 (PFÄLZISCHE PLASTIC-WERKE)  * Anspruch 4 * | 1 |
| | DE - A - 1 781 384 (E.W. BLISS)  * Seite 2, Zeile 18 bis Seite 3, Zeile 4 * | 1,2 |
| | CH - A - 448 497 (HABASIT)  * Spalte 1, Zeile 38 bis Spalte 2, Zeile 29 * | 1,2 |
| | DE - U - 7 807 842 (E. KRAMPITZ)  * ganzes Dokument * | 2 |
| A | FÖRDERN UND HEBEN, 27. Jahrgang Nr. 10, 1977 Mainz "Leichte vollsynthetische Fördergurte" Seiten 920 und 921  * ganzes Dokument * | |

**KLASSIFIKATION DER ANMELDUNG (Int.Cl.²)**

B 65 G 15/56
A 01 K 31/04

**RECHERCHIERTE SACHGEBIETE (Int. Cl.²)**

A 01 K 31/00
B 65 G 15/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 09-07-1979 | SIMON |

EPA form 1503.1  06.78